# EUROPEAN PATENT SPECIFICATION

(11) **EP 3 088 779 B1**
(45) Date of publication and mention of the grant of the patent: **17.10.2018**
(21) Application number: 15173249.2
(22) Date of filing: 23.06.2015
(51) Int. Cl.: F16K 31/124, F16K 31/42

(54) **SOFT THROTTLING VALVE**
WEICHES DROSSELVENTIL
SOUPAPE D'ÉTRANGLEMENT SOUPLE

(30) Priority: 30.04.2015 IN 1215DE2015
(43) Date of publication of application: 02.11.2016
(60) Divisional application: 18165391.6
(73) Proprietor: Danfoss A/S, 6430 Nordborg (DK)
(72) Inventor: Vijayan, Aravind, 625009 Madurai (IN); Arul Mike Prakash, John, 600 073 Chennai (IN); Venkatesh, Raghavendra, 600073 Chennai (IN); Matzen, Detlef, 6200 Aabenraa (DK)

(56) References cited:
- DE-A1- 3 305 093
- FR-A1- 2 250 059
- US-A- 3 185 344
- US-A- 3 415 269
- US-A1- 2008 251 146

## Description

The present invention relates to a combination of a top cover and a soft throttling valve body according to the preamble of claim 1.

Additionally the present invention relates to a method for throttling the main valve of the soft throttling valve according to the preamble of claim 9.

US 3 185 344 discloses a top cover for a soft throttling valve body, the top cover comprising one or more fluid conduits for transferring a pilot fluid flow to the soft throttling valve body, the pilot fluid flow being transferred for a setting degree of an opening of a main valve situated in the soft throttling valve body, wherein the top cover comprises a follower arrangement arranged to throttle the pilot fluid flow, the follower arrangement being arranged to throttle the pilot fluid flow depending on a degree of opening of the main valve.

US 3 415 269 A shows a pilot controlled poppet valve in which a valve element is loaded in a direction towards a valve seat by means of a pressure at the inlet. This pressure propagates through an opening into a pressure chamber. Only when the pressure in the pressure chamber is lowered to a sufficient extend, the pressure at the inlet is able to lift the valve element from the valve seat.

US 2006/0197041 A1 relates to a dual position pilot operated valve assembly. It is disclosed that said assembly comprises an adjustment mechanism controlling the degree of opening/closing of the valve assembly. The utilization of the dual position pilot operated valve assembly, by a reason of its opening and/or closing only part way, prevents or at least mitigates liquid hammer or vapor propelled liquid at the termination of a hot gas defrost step in a refrigeration cycle operation.

WO 2011/063375 A1 shows an adjustable fail-safe suction valve stop. This valve provides for hot gas defrost in refrigeration applications. Said valve includes a second piston reciprocable within a bore in an adapter body, the second piston having a portion adapted to extend into a bore in the valve body for contacting a first piston. The portion of the second piston may be axially adjustable to optimize the partial opening of the valve when the second piston is pushed fully downward towards the first piston.

US 5, 070, 707 discloses a shockless system and hot gas valve for refrigeration and air conditioning. The shockless defrost valve operated by solenoids is automatically self-controlled by the downstream pressure of the valve. When a valve opening is called for, a pilot solenoid valve opens a regulatory passage. The resistance of the regulatory passage to the hot gas flow reduces the pressure gradient of the flow and thus eliminates the possibility of a shock wave being propagated. When the downstream pressure due to the outlet pressure control of the evaporator increases to a preset value, a diaphragm driven by the control pressure from downstream moves and opens a passage for the gas from upstream of the valve to drive a power piston downward.

It is a known issue that an exact control of the degree of opening of the main valve in the soft throttling valve can be difficult. Sometimes such a control system for the pilot fluid flow may comprise many elements and thus may become complex and expensive. Thus, the control over the pilot fluid flow for setting the degree of opening of the main valve may be inadequate.

It is an object of the invention to provide a combination of the top cover and the soft throttling valve body and the method for throttling main valve of the soft throttling valve which allow for a good control of the pilot fluid flow for setting the degree of opening of the main valve situated in the soft throttling valve body.

The object of the invention is solved by the combination according to claim 1.

Additionally, the object of the invention is solved by the method according to claim 8. Using the follower arrangement has the advantage that the pilot fluid flow may be automatically reduced when the degree of opening of the main valve reaches a certain value. Then, due to a reduced pressure increase, a further opening of the main valve may be prevented, so that the main valve maintains a partially opened position, thus the degree of opening corresponds to between more than 0 % of a maximum main fluid flow through the main valve and less than 100 % of the maximum main fluid flow through the main valve. This allows to have a stepwise opening of the main valve in a soft opening process wherein in a first step only a partial opening of the main valve occurs, and wherein in a later step a full opening of the main valve occurs. Likewise, such soft throttling may be applied in a soft closing process wherein in a first step a partial closure to the partial opening of the main valve occurs and in a second step a full closure of the main valve occurs.

Thus, by means of the invention good control over the degree of opening of the main valve of the soft throttling valve may be achieved.

Concerning the top cover it is preferred that the follower arrangement comprises a biasing element and a follower element, the biasing element biasing the follower element so as to reduce the pilot fluid flow through the top cover. This allows to bias the follower element towards a position in which for example the pilot fluid flow through the follower arrangement is so much reduced that the further opening of the main valve is effectively prevented. It is preferred that the biasing element biases the follower element in a position in which the pilot fluid flow through the follower arrangement is completely stopped. In some embodiments of the invention though the pilot fluid flow is preferably just reduced in that position, preferably by more than 50 %, more preferably by more than 70 %, more preferably by more than 90 %, and most preferably by more than 95 % compared to a maximum pilot fluid flow through the follower arrangement. Thus, a very limited pilot fluid flow may still be allowed even if the biasing element significantly reduces the pilot fluid flow depending on the degree of opening of the main valve. Then a very slow continuous throttling process of the main valve is possible.

In the top cover it is preferred that the follower arrangement has an orifice and the follower arrangement is arranged to reduce the pilot fluid flow through the orifice. Thus, the orifice is used as a duct for supplying the pilot fluid flow towards the main valve to control the degree of opening of the main valve. When the follower arrangement follows a movement of a main valve element during the opening process or the closing process it may gradually or instantaneously reduce the pilot fluid flow through the orifice. In some embodiments the follower arrangement is arranged to reduce the pilot fluid flow through the orifice instantaneously, for example when the main valve reaches a predetermined degree of opening. By this a sudden stop of the movement of the main valve element during the opening process or the closing process becomes possible. It is preferred that the follower element has a surface which cooperates with the orifice in order to reduce the pilot fluid flow. Preferably, the follower element covers the orifice in a closed position of the follower arrangement in order to reduce or stop the pilot fluid flow through the orifice. For example, this may happen by the surface present at the follower element. It is preferred that the pilot fluid flow passes through the orifice in general in a direction parallel to a movement direction of the follower element. It is preferred that the movement direction of the follower element is parallel to the movement direction of the main valve element of the main valve. Thus, a direct pilot fluid flow from the top cover towards the main valve is possible through the orifice.

In a preferred embodiment of the top cover, the biasing element biases the follower element towards the orifice. This is a preferred way of interaction between the biasing element, the follower element and the orifice. Thus, the orifice may be partially or totally blocked depending only on a force exerted by the biasing element and the movement of the main valve element which corresponds to a change in the degree of opening of the main valve. By that, the effect of the follower arrangement becomes independent from a pilot fluid pressure or other external forces which otherwise may be necessary to reduce or stop the pilot fluid flow at a predetermined degree of opening of the main valve. In other words, the follower arrangement provides a self-controlled shut down or opening of the orifice during the opening process or the closing process, respectively, of the main valve.

In a preferred embodiment of the top cover, the biasing element is a coil spring. It is also preferred that the coil spring surrounds the follower element coaxially. Of course, other types of springs which serve the same purpose may also be used. The advantage of the coil spring may be in that it can allow compact construction of the follower arrangement. It is preferred that the coil spring is seated at a surface of the follower arrangement opposite of a follower element seat which preferably comprises the orifice of the follower arrangement. By this a linear translation of the follower element towards the orifice becomes possible.

In a preferred embodiment of the top cover the follower arrangement has the follower element which is arranged to be attached to the main valve element of the main valve. Preferably the follower element has a threaded connector being connectable to the main valve element. The threaded connector furthermore allows easy replacement of the follower element. By permanently or releasably attaching the follower element to the main valve element a permanent following of the main valve element according to the degree of opening of the main valve can be ensured. In some embodiments then the biasing element is omitted.

In the top cover, it is preferred that the follower element is arranged to mechanically sense the position of the main valve. Thus, the follower arrangement may preferably be a needle follower comprising a needle. Such a construction may be provided at a low price and due to its simple design it can be very failsafe. Furthermore, a length of the needle may be set so that the predetermined degree of opening of the main valve may be reached before the pilot fluid flow is downthrottled during the opening process of the main valve. For example during the first step in the opening process of the main valve, a comparably long length of the needle may result in a larger degree of opening of the main valve while a comparably short length of the needle may result in a smaller degree of opening of the main valve as the blocking of the orifice by the follower element may occur rather late or rather early, respectively. Thus, by exchanging the needle having the shorter length with the needle having the longer length, the throttling behavior of the follower arrangement may easily be adapted in view of the desired use of the soft throttling valve. It is preferred that the needle comprises two needle sections, wherein a first needle section has a larger diameter perpendicular to a longitudinal extension of the needle element than a second section of the needle. This first section of the needle element may be used as a seat for the biasing element. Furthermore, this first section of the needle may be used to provide the surface for interacting with the orifice of the follower arrangement. It is preferred that in a biased position of the follower element the needle extends outwardly of the top cover so that it can interact with the main valve element of the soft throttling valve easily.

In a preferred embodiment of the soft throttling valve according to the invention it is preferred that the soft throttling valve comprises the biasing element and the follower element, the follower element being biased by the force exerted by the biasing element in order to follow the movement of the main valve element. The advantages and embodiments described in view of the top cover also pertain to the soft throttling valve. Thus, the biasing element may bias the follower element to a position in which the pilot fluid flow to the main valve element may be down throttled when the main valve element reaches a position in which the desired degree of opening of the main valve is established. This position of the follower element may correspond to the closed position of the follower arrangement. It is further more preferred that the soft throttling valve has a resetting spring for the main valve element. This may create a force in order to bias the main valve element to the fully closed position. Preferably the resetting spring at least partially surrounds a stem section of the main valve element.

In a preferred embodiment of the soft throttling valve the follower arrangement has the orifice and the follower element is arranged to reduce the pilot fluid flow through the orifice depending on the degree of opening of the main valve during the throttling process so that the main valve can be maintained in the partially open position during the throttling process of the main valve. It is preferred that the main valve is maintained in the partially open position for a predetermined amount of time during the opening process or the closing process of the main valve. By that, the pressure shock may be effectively prevented. For example, at the predetermined degree of opening of the main valve the follower arrangement may partially or completely reduce the pilot fluid flow through the orifice. It is preferred that at the predetermined degree of opening of the main valve the pilot fluid flow for driving the main valve is reduced to 50 % of the initial pilot fluid flow through the follower arrangement. Preferably, the initial pilot fluid flow is a maximum pilot fluid flow. It is more preferred that the pilot fluid flow in such a case is reduced by more than 70 %, preferably by more than 85 %, preferably by more than 95 %. It is most preferred that the pilot fluid flow through the orifice is completely stopped when the main valve reaches the predetermined degree of opening, preferably depending on the length of the follower element.

In a preferred embodiment of the soft throttling valve the biasing element biases the follower element towards the orifice. As explained in view of the top cover this allows for self-controlled throttling of the pilot fluid flow depending only on the force exerted by the biasing element and the degree of opening of the main valve whose main valve element is preferably followed by the follower arrangement. It is preferred that the biasing element biases the follower element towards the orifice so that the first section of the follower element partially or completely blocks the orifice when the predetermined degree of opening of the main valve is reached.

In a preferred embodiment of the soft throttling valve, the follower element is attached to the main valve element, preferably via a threaded connection. In such embodiments the biasing element may be omitted as due to the needle being fixed to the main valve element a permanent following is ensured. In order to ensure that the needle can move sufficiently and still control the flow it is preferred that the needle may have a reduced cross section over part of its length and a cross section that does effective not allow flow over the remainder of the length of the needle, but the cross section still allows the needle to move with the main valve element. This arrangement may be more fail-safe than the follower arrangement with the biasing element.

It is preferred, in an embodiment of the soft throttling valve, that the follower element is arranged to mechanically sense the position of the main valve. Preferably the follower arrangement is the needle follower comprising the needle. The advantages discussed in view of the top cover comprising the follower arrangement also apply in this case. Having the needle as the follower element allows for a simple, dependable and flexible solution.

For the soft throttling valve, it is preferred that the soft throttling valve comprises the soft throttling valve body and the top cover, the top cover being preferably the top cover according to any of the claims 1 to 6. By having the follower arrangement in the top cover the soft throttling valve body may easily be provided with a new top cover comprising the needle of a different length or replacing older types of pilot fluid flow throttling designs. It is preferred that the main valve is situated in the soft throttling valve body. It is furthermore preferred that the top cover comprises controlling valves, preferably solenoid valves, for activating or deactivating the pilot fluid flow through the soft throttling valve. Preferably, there are two solenoid valves for this purpose. It is furthermore preferred that the pilot fluid flow is taken from a main fluid flow before the main fluid passes through the main valve. In other embodiments the pilot fluid flow may also be from a fluid flow different from that to be throttled by the main valve, thus not transferring through the main valve. A preferred fluid is a gas, even more preferred a hot gas, preferably at a temperature above 100° C. This allows for reliable deicing in a refrigeration system.

In a method according to the invention it is preferred that the follower arrangement comprises the orifice and the follower element, the follower element reducing the pilot fluid flow through the orifice when the main valve reaches the predetermined degree of opening. For example, during the opening process of the main valve, when the main valve reaches the predetermined degree of opening, the pilot fluid flow may be reduced or completely stopped in order to maintain the main valve in the partially opened position. It is preferred that the predetermined degree of opening of the main valve at which the follower arrangement throttles the pilot fluid flow corresponds to less than 10 % of the maximum main fluid flow through the main valve, preferably to less than 20 %, preferably to less than 40 %, preferably to less than 60 %, and most preferably to less than 75 %. On the other hand, it is preferred that the predetermined degree of opening of the main valve at which the follower arrangement throttles the pilot fluid flow is larger than 5 % of the maximum degree of opening of the main valve, preferably more than 15 %, preferably more than 35 %, preferably more than 55 % and preferably more than 65 %. Such values allow for a controlled first step of opening or closing the main valve in order to prevent pressure shock. For example, the predetermined degree of opening amounts to 14 % of the maximum degree of opening of the main valve. Preferably, in the second step of opening, the main valve is set to 100 % of opening. Preferably the switching between the first step with a limited degree of opening and the second step with a complete opening of the main valve corresponds to a sudden increase of main flow. Thus preferably the pilot fluid flow driving the main valve element can be suddenly increased or decreased to open or close the main valve immediately.

In the method according to the invention it is preferred that reducing the pilot fluid flow through the orifice comprises blocking the orifice by the follower element in order to stop the pilot fluid flow through the orifice when the main valve reaches the predetermined degree of opening. By that a sudden stop of the movement of the main valve is possible. Blocking in this sense means basically closing the orifice in order to reduce the pilot fluid flow to approximately 0 % of the maximum possible pilot fluid flow through the follower arrangement.

In the following the invention is described in view of exemplary embodiments provided in the attached figures, in which:
- Fig. 1: shows a perspective view of the soft throttling valve and the top cover according to the invention;
- Fig. 2: shows a top view of the embodiment according to the solution depicted in Fig. 1;
- Fig. 3: shows a partial section along a longitudinal axis of the soft throttling valve depicted in Fig. 1;
- Fig. 4: shows a schematic longitudinal section of the soft throttling valve according to the invention;
- Fig. 5a and 5b: show details of embodiments of the follower arrangement;
- Fig. 6: shows an exemplary time-flow-diagram which may be obtained by using embodiments of the invention; and
- Fig. 7a to 7d: illustrate the method of soft throttling the main valve according to the invention.

Reference numerals are introduced into the detailed description of embodiments following hereafter. They are meant for increasing the readability of the claims and are in no way limiting.

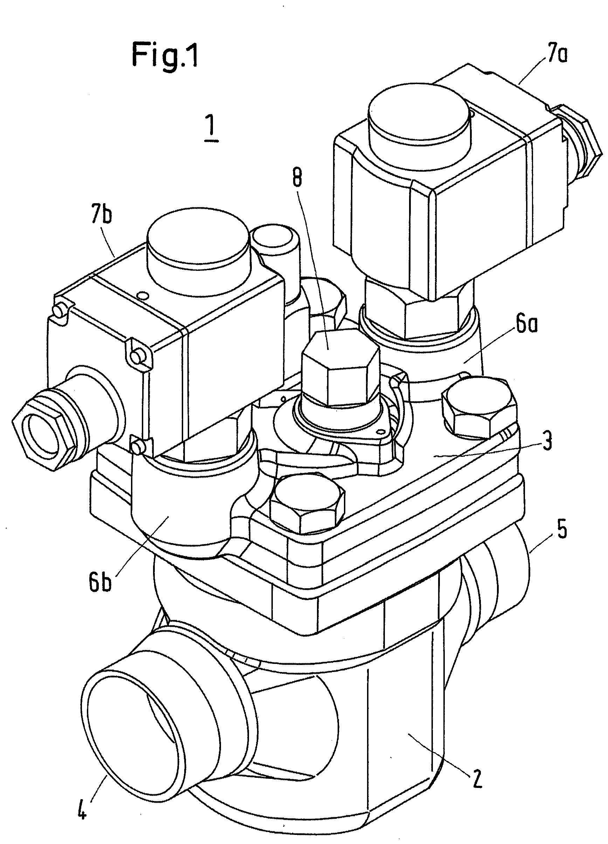

Fig. 1 shows the soft throttling valve 1 according to the invention. The soft throttling valve 1 comprises the soft throttling valve body 2 and the top cover 3. The soft throttling valve body 2 comprises the inlet 4 and the outlet 5. The inlet 4 is adapted to receive the main fluid flow. The outlet 5 is adapted to let out the main fluid flow transferred through the soft throttling valve body 2. The top cover 3 comprises valve installation seatings 6a, 6b for installation of valves 7a, 7b, in this case solenoid valves. They are used in order to activate or deactivate the pilot fluid flow for the main valve within the soft throttling ning valve body 2 when necessary. Furthermore, the top cover 3 comprises the follower arrangement 8 arranged to throttle the pilot fluid flow, the follower arrangement 8 being arranged to throttle the pilot fluid flow depending on the degree of opening of the main valve, not shown in this figure.

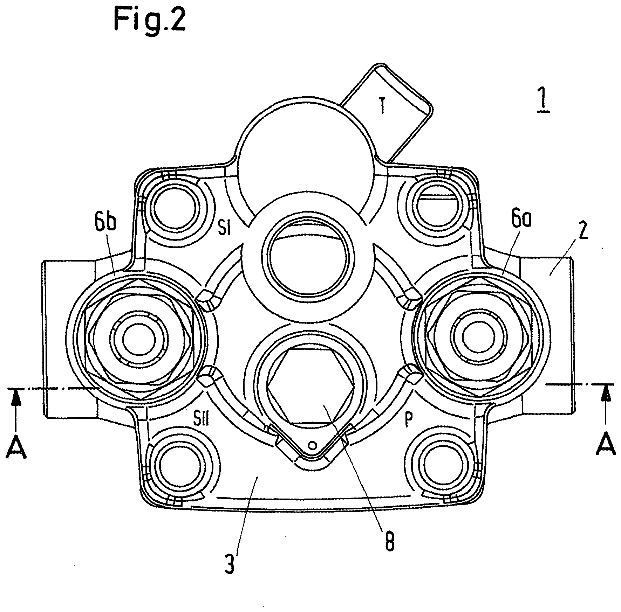

Referring now to Fig. 2 it may be seen that at the top cover 3 the follower arrangement 8 is arranged symmetrically between the valve installation seatings 6a, 6b, which in this case are provided to the right and to the left of the follower arrangement 8 and on top of the inlet 4 and the outlet 5 of the soft throttling valve body 2 in the top view as given in Fig. 2. This allows for a compact design. However, the specific arrangement of the follower arrangements in view of the valve installation seatings 6a, 6b may be different in other embodiments.

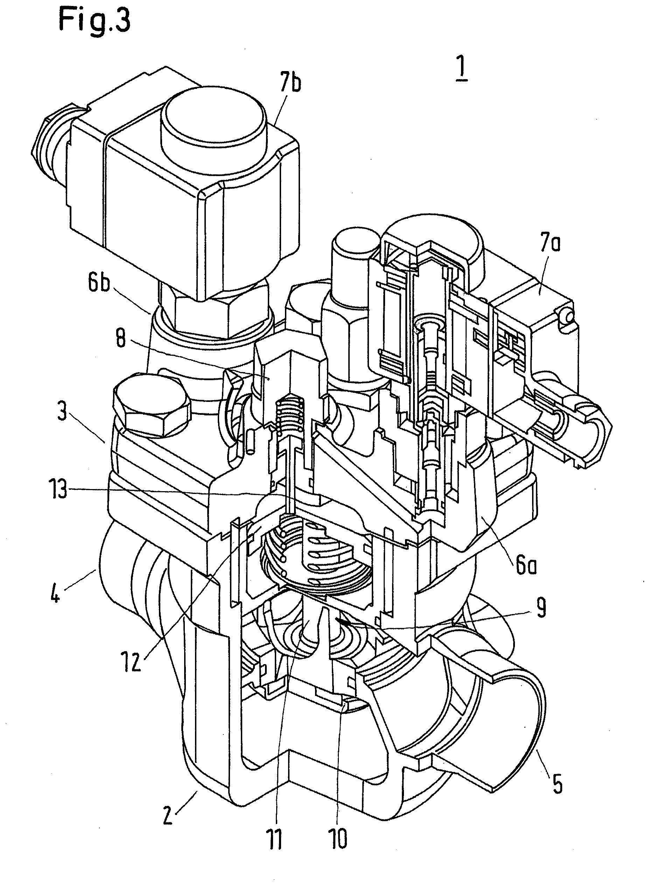

As can be seen in Fig. 3, the main valve comprises the main valve element 9 which has a throttling section 10, the stem section 11 and a top plate section 12, the stem section 11 connecting the throttling section 10 with the top plate section 12. The follower element 13 arranged in the follower arrangement 8 is arranged to follow a translatory movement of the main valve element 9 by being in contact with the top plate section 12 of the main valve element 9. Furthermore, the main valve comprises the main valve seat 14 which cooperates with the throttling section 10 of the main valve element 9 in order to control the main fluid flow through the soft throttling valve 2.

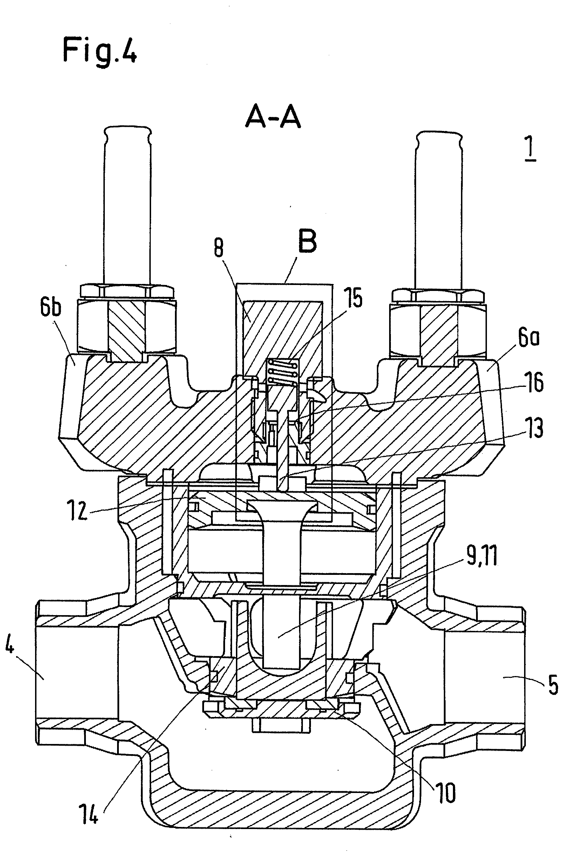

Fig. 4 illustrates more details of the soft throttling valve 1 according to the invention. As may be seen the follower arrangement 8 comprises the biasing element 15, in this case the coil spring which is placed above the follower element 13. Thus, the follower element 13 is interposed between the biasing element 15 and the follower element seat 16 of the follower arrangement 8. The biasing element 15 biases the follower element 13 so as to reduce the pilot fluid flow through the top cover 3. As in this case the follower element 13 comprises the needle, the biasing element 15 is seated on the first section of the follower element 13 in order to exert a force towards the top plate section 12 of the main valve element 9 and towards the follower element seat 16 of the follower arrangement 8. By this, the follower element 13 may follow the movement of the main valve element 9 and throttle the pilot fluid flow depending on the degree of opening of the main valve as explained in detail below.

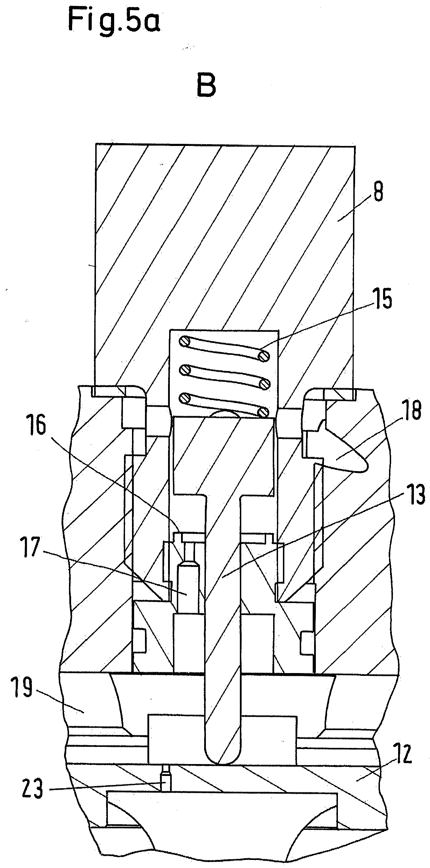

Fig. 5a shows the follower arrangement 8 of the soft throttling valve 1 in more detail. The follower arrangement 8 has a housing which houses the follower element 13, the biasing element 15 and the follower element seat 16. Furthermore, the housing comprises the orifice 17 which provides a fluid connection between a fluid conduit 18 for transferring the pilot fluid flow for setting the degree of opening of the main valve and the main valve element 9. The follower element 13 is arranged to reduce the pilot fluid flow through the orifice 17. This is because the biasing element 15 biases the follower element 13 towards the orifice 17. Thus, as the follower element 13 is in contact with the top plate section 12 of the main valve element 9 the follower element 13 is biased by the force exerted by the biasing element 15 in order to follow the movement of the main valve element 9. This allows that the main valve is maintained in the partially open position during the throttling process of the main valve as the surface of the follower element 13, which in this case comprises the needle, at the predetermined degree of opening of the main valve will partially cover the orifice 17 in the follower element seat 16. By that, the pilot fluid flow to the top plate section 12 of the main valve element 9 is downthrottled and the movement of the main valve element 9 can be stopped due to a stop in pressure increase on the top plate section 12. However, there is constantly flow in and out of a pressure chamber 19 above the top plate section 12. A balance is achieved where there is no pressure build up in the pressure chamber 19.

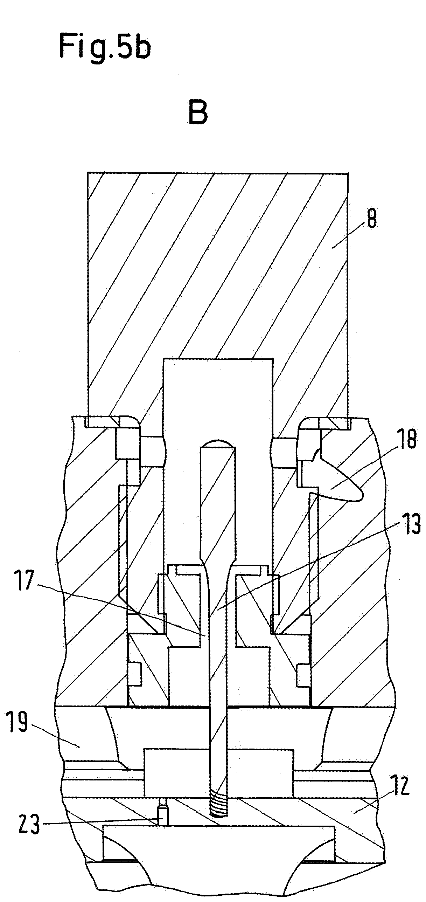

Fig. 5b shows an alternative construction of the follower arrangement 8. In this construction the follower element 13 is arranged within the orifice 17. Furthermore, no biasing element 15 is present. Instead, in order to allow the follower element 13 to sense the degree of opening of the main valve in an alternative manner, the follower element 13 is attached to the main valve element 9. Specifically, the follower element 13, here the needle, is attached to the top plate section 12 via a threaded connection. In order to ensure that the needle can move sufficiently and still control the flow to the pressure chamber 19 above the top plate section 12, the needle has a reduced cross section over part of its length and a cross section that does effectively not allow flow over the remainder of the length of the needle, but the cross section still allows the needle to move according to the degree of opening of the main valve. Thus, with the part of its length that does not allow flow through the orifice 17, the follower element 13 may block the orifice 17 when the main valve reaches a predetermined degree of opening. As the needle is attached to the main valve element 9 via the threaded connector, the needle is adapted to constantly follow the main valve element 9 depending on the degree of opening of the main valve.

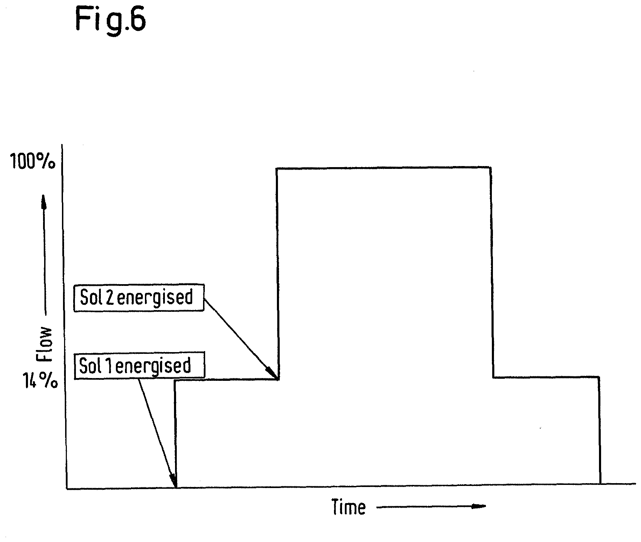

The mechanical design as described before may lead to a time-flow-dependency as shown in Fig. 6. For example, a first solenoid (Sol 1, 7a) may be energized to start the pilot fluid flow for the main valve element 9. By that, the pressure driving the main valve element 9 increases and the main valve element 9 starts to move towards the predetermined degree of opening. The follower element 13 is designed to close the orifice 17 in the follower arrangement 8 when the predetermined degree of opening of the main valve is reached, in this case at 14 % of the maximum possible opening. The main valve is then maintained in the partially opened position as the driving pressure created by the pilot fluid on the main valve remains stable. At a later time, a second solenoid (Sol 2, 7b) is energized which provides another pilot fluid flow to the main valve element 9 circumventing the closed orifice 17 in the follower arrangement 8. Thus, the other pilot fluid flow may be used to further increase the pressure on the top plate section 12 again in order to reach the maximum possible main fluid flow through the main valve despite the orifice 17 being closed.

When the main valve shall be closed this can also be done in two steps as also illustrated in fig. 6. The main valve is closed partially by de-energizing the second solenoid (Sol 2, 7b). The main valve is fully closed by de-energizing the first solenoid (Sol 1, 7a) and the second solenoid (Sol 2, 7b). In the first step the second solenoid 7b is de-energized. The pilot fluid successively bleeds from the pressure chamber 19 above the top plate section 12 to the pressure chamber 19 below the top plate section 12 and then towards the outlet 5. The gradually decreasing pressure will allow the main valve to close. During the closing process, the top plate section 12 will translate the follower element 13 against the biasing force of the biasing element 15 away from the orifice 17 so that the fluid flow may leave the pressure chamber 19 through the orifice 17. Keeping the first solenoid (Sol 1, 7a) energized will hold the main valve in the partially opened position. When both solenoids (7a, 7b) are de-energized, the pressure will gradually equalize with the outlet 5 volume pressure, allowing the main valve to fully close. When the pressure on the top plate section 12 becomes so low that the main valve completely closes, the main fluid flow through the main valve finally falls to 0 % of the maximum main fluid flow.

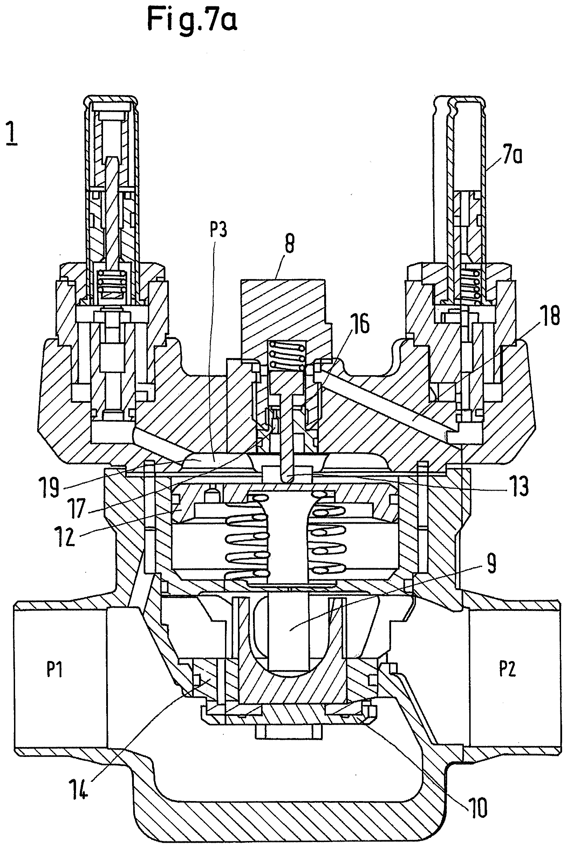

Fig. 7a to 7d now finally illustrate the process as shown in Fig. 6 in more detail.

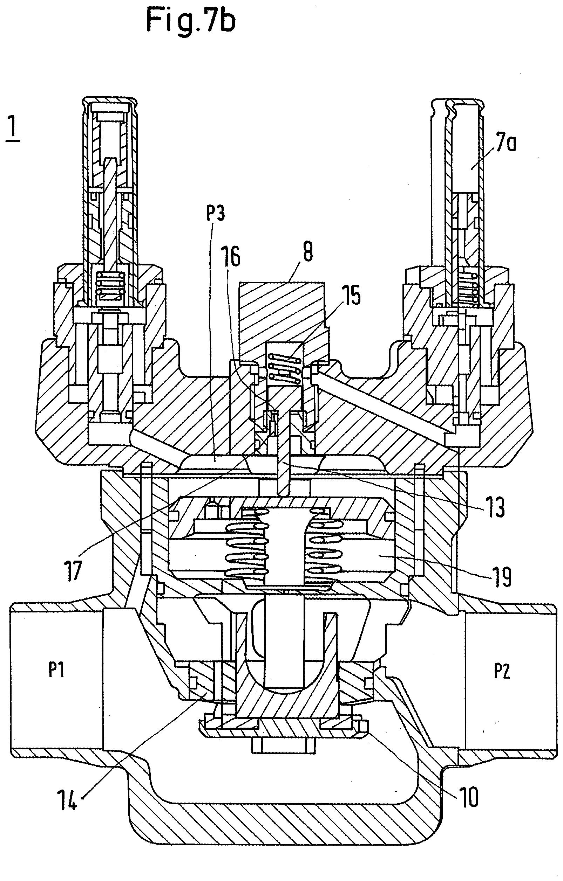

Fig. 7a shows a situation in which the main valve is completely closed, which means that the throttling section 10 of the main valve element 9 cooperates with the main valve seat 14 in order to maintain a main fluid flow of 0 % of the maximum possible main fluid flow. Initially, there is a high pressure of main fluid in zone P1 next to the inlet 4. The pressure in zones P3 and P2 is low as the main valve and all solenoid valves 7a, 7b are closed in this situation. When solenoid valve 7a is energized the pilot fluid flow to the follower arrangement 8 is established via the fluid conduit 18 connecting zone P1 with the follower arrangement 8. The fluid conduit 18 is part of the top cover 3 of the soft throttling valve 1. The pilot fluid flow, which is in zone P1 between the inlet 4 and the main valve element 9 taken from the main fluid, which shall pass as the main fluid flow through the main valve, flows through the orifice 17 into the pressure chamber 19 above the top plate section 12. Thus, when the valve 7a opens the pressure on the inlet side will propagate to the pressure chamber 19 above the top plate section 12. The pressure will however not reach the level at the inlet 4, but a level somewhere in between inlet 4 pressure and outlet 5 pressure. This pressure will generate a force that can overcome an upwards force from a resetting spring 20 biasing the main valve element 9 to the closed position and the upwards force from the main valve element 9, because the area of the top plate section 12 is approximately twice the area of the throttling section 10. The top plate section 12 will in that situation position itself in a position that corresponds to a partly opening of the main valve, as shown in fig. 7b. Having the resetting spring 20 is preferred as it ensures that the main valve can be closed even when the pressure difference between the inlet 4 and the outlet 5 is low.

As the pressure increases in section P3, the top plate section 12 is translated further downwards, thus also translating downwards the stem section 11 and the throttling section 10 of the main valve. As depicted in fig. 7b, thus the main valve is partially opened as the throttling section 10 moves away from the main valve seat 14. The follower element 13 follows the movement of the top plate section 12 and thus the movement of the main valve element 9 as the follower element 13 is biased towards the top plate section 12 by the biasing element 15. As the follower element seat 16 comprises the orifice 17, when the degree of opening of the main valve reaches the predetermined value the surface of the first section of the follower element 13 comes in contact with the follower element seat 16 and reduces the pilot fluid flow through the orifice 17 in the follower element seat 16. That means that the pressure in zone P3 is controlled and kept about constant. Thus a limited pressure is provided in zone P2 corresponding to the partial opening of the main valve. In this exemplary case the main valve is opened at 14 % of the maximum main valve opening. This partial opening may be maintained as long as desired as it is completely self-controlled by the follower element 13 closing the orifice 17 due to the position of the top plate section 12 and the force exerted by the biasing element 15 keeping the follower element 13 in contact with the top plate section 12. The predetermined degree of opening is set via the length of the follower element 13, thus the length of the needle.

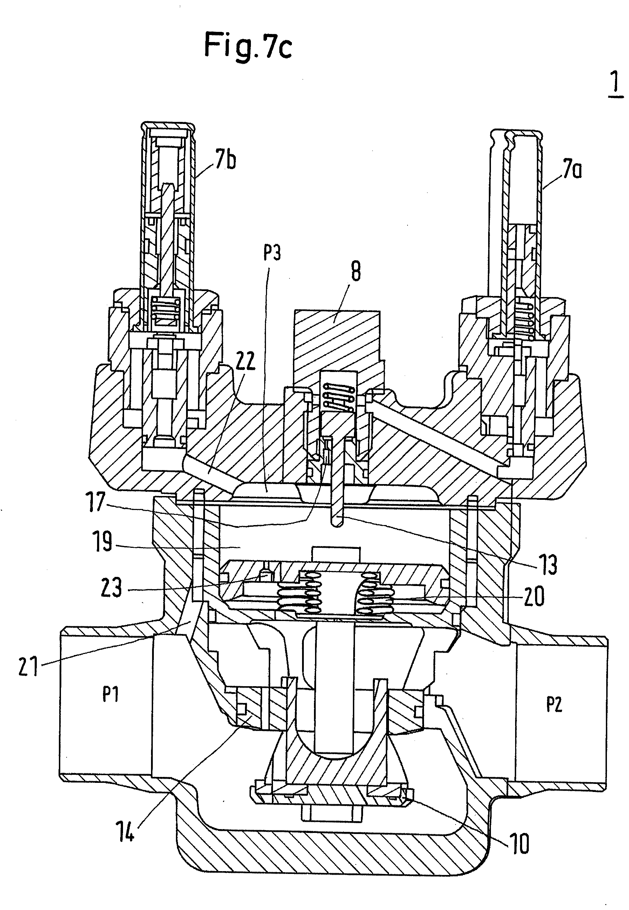

After this first step of opening the second step of opening occurs as is illustrated in Fig. 7c. In this second step of opening the second controlling valve 7b, in this case the second solenoid valve, is energized as well. The other pilot fluid flow is then supplied to the pressure chamber 19 above the top plate section 12 circumventing the follower arrangement 8 via a supply channel 21, the second controlling valve 7b and a feeding channel 22. The additional pressure created in P3 moves the main valve element 9 to a position in which the degree of opening of the main valve resembles 100 % of the maximum fluid flow through the main valve. Thus, a maximum pressure may be provided in zone P2 and by that also at the outlet 5. The follower element 13 at this stage loses contact with the top plate section 12 as it is hindered by the follower element seat 16 and due to the force exerted by the biasing element 15 remains in the position in which the orifice 17 is closed.

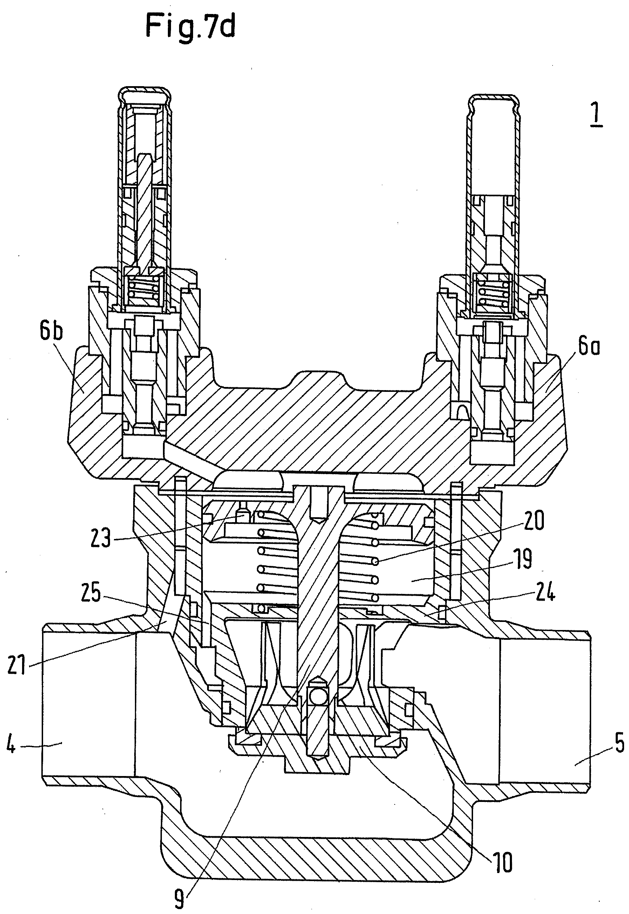

For closing the main valve an inversed approach may be taken so that in a first step the partial opening, thus partial closing, of the main valve is maintained. To achieve this, the second solenoid valve (Sol 2, 7b) is de-energized while the first solenoid valve (Sol 1, 7a) is kept energized, thus opened. By later de-energizing the first solenoid valve 7a, the needle can be further translated against the biasing force exerted by the biasing element 15 by the force provided by the resetting spring 20 of the main valve element 9 so that finally the degree of opening of 0 % of the maximum opening of the main valve is established. In order to allow that pilot fluid may bleed from the pressure chamber 19 to the outlet 5, the top plate section 12 comprises, as shown in the perspective chosen for fig. 7d, a bleed channel 23 that allows pressure propagation between the pressure chamber 19 below and above the top plate section 12. Likewise a pressure chamber floor 24 comprises one or more, for example, three, bleed passages 25, that provide for pressure propagation between the pressure chamber 19 and the outlet 5. Through the bleed channel 23 and the one or more bleed passages 25 the pilot fluid may drain from the pressure chamber 19 to the outlet 5 when the main valve is to be closed.

Thus, the invention allows throttling the pilot fluid flow for the main valve by means of the follower arrangement 8 in order to set the degree of opening of the main valve during the throttling process of the main valve, the throttling of the pilot fluid flow depending on the degree of opening of the main valve, so as to allow for the soft throttling process of the main valve. As can be seen, soft throttling is possible during the opening process and the closing process of the main valve while in some embodiments soft throttling may be only embodied at the opening process or the closing process. Soft throttling becomes possible as the follower arrangement 8 comprises the orifice 17 and the follower element 13, the follower element 13 reducing the pilot fluid flow through the orifice 17 when the main valve reaches a predetermined degree of opening. Specifically, the pilot fluid flow through the orifice 17 is controlled by the follower element 13 in order to reduce the pilot fluid flow being transferred through the orifice 17.

As illustrated the present invention allows the top cover 3 for the soft throttling valve 1 to provide good control of throttling the main valve in order to prevent pressure shock. As opening and/or closing of the main valve may for example be performed in a two-step manner, sudden pressure increase or decrease in the refrigeration system during defrosting may be prevented. It may be a special advantage of the invention to use the self-controlled throttling of the main valve element 9 in the first step of throttling the main valve.

## Claims

1. A combination of a top cover (3) and a soft throttling valve body (2), the valve body (2) comprising a valve inlet (4), a valve outlet(5), a main valve element (9) arranged between inlet (4) and outlet (5), being biased by a resetting spring (20) to a closed position, and having a top plate section (12), a throttling section (10), and a stem section (11) connecting the throttling section (10) with the top plate section (12), the top cover (3) comprising one or more fluid conduits (18) for transferring a pilot fluid flow from a zone (P1) next the valve inlet (4) to the soft throttling valve body (2), the pilot fluid flow being controlled by a pilot valve (7a) and being transferred for setting a degree of opening of a main valve situated in the soft throttling valve body (2), wherein the top cover (3) comprises a follower arrangement (8) arranged to throttle the pilot fluid flow by means of an orifice (17), the follower arrangement (8) being arranged to throttle the pilot fluid flow depending on a degree of opening of the main valve, **characterized in that** when the pilot valve (7a) is energized the pilot flow to the follower arrangement (8) is established via the fluid conduit (18) connecting the zone (P1) next the valve inlet (4) with the follower arrangement (8), the pilot flow flows through the orifice (17) into the pressure chamber (19) above the top plate section (12), in which the pressure will not reach a level of n the pressure in the zone (P1) next the valve inlet (4), but a level between the pressure at the valve inlet (4) and the valve outlet (5) so that this pressure generates a force on the main valve element (9) that can overcome an upwards force from a resetting spring (20) biasing the main valve element (9) to the closed position and the upwards force from the main valve element (9) because the area of the top plate section (12) is approximately twice the area of the throttling section (10).

2. The combination according to claim 1, **characterized in that** the follower arrangement (8) comprises a biasing element (15) and a follower element (13), the biasing element (15) biasing the follower element (13) so as to reduce the pilot fluid flow through the top cover (3).

3. The combination according to claims 1 or 2, **characterized in that** the follower arrangement (8) has an orifice (17) and the follower arrangement (8) is arranged to reduce the pilot fluid flow through the orifice (17).

4. The combination according to claims 2 and 3, **characterized in that** the biasing element (15) biases the follower element (13) towards the orifice (17).

5. The combination according to any of the claims 1 to 4, **characterized in that** the follower arrangement (8) has the follower element (13) which is arranged to be attached to a main valve element (9) of the main valve.

6. The combination according to any of the claims 1 to 5, **characterized in that** the follower arrangement (8) has the follower element (13) which is attached to the main valve element (9) of the main valve.

7. The combination according to any of the claims 1 to 6, **characterized in that** the follower element (3) is arranged to mechanically sense the position of the main valve.

8. A method for throttling a main valve of a soft throttling valve (1) comprising a valve inlet (4), a valve outlet(5), a main valve element (9) arranged between inlet (4) and outlet (5), being biased by a resetting spring (20) to a closed position, and having a top plate section (12), a throttling section (10) and a stem section (11) connecting the throttling section (10) with the top plate section (12), the method comprising the step of:
- throttling a pilot fluid flow from a zone (P1) next the valve inlet (4) for the main valve by means of an orifice (17) of a follower arrangement (8) in order to set a degree of opening of the main valve during a throttling process of the main valve, the throttling of the pilot fluid flow depending on the degree of opening of the main valve, so as to allow for a soft throttling process of the main valve, **characterized in that** when the pilot valve (7a) is energized the pilot flow to the follower arrangement (8) is established via the fluid conduit (18) connecting the zone (P1) next the valve inlet (4) with the follower arrangement (8), the pilot flow flows through the orifice (17) into the pressure chamber (19) above the top plate section (12) in which the pressure will not reach a level of the pressure in the zone (P1) next the valve inlet (4), but a level between the pressure at the valve inlet (4) and the valve outlet (5) so that this pressure generates a force on the main valve element (9) that can overcome an upwards force from a resetting spring (20) biasing the main valve element (9) to the closed position and the upwards force from the main valve element (9) because the area of the top plate section (12) is approximately twice the area of the throttling section (10).

9. The method according to claim 8, **characterized in that** the follower arrangement (8) comprises an orifice (17) and a follower element (13), the follower element (13) reducing the pilot fluid flow through the orifice (17) when the main valve reaches a predetermined degree of opening.

10. The method according to claim 9 **characterized in that** reducing the pilot fluid flow through the orifice (17) comprises blocking the orifice by the follower element (13) in order to stop the pilot fluid flow through the orifice (17) when the main valve reaches the predetermined degree of opening.

## Patentansprüche

1. Kombination aus einer oberen Abdeckung (3) und einem Weichdrosselventilkörper (2), wobei der Ventilkörper (2) einen Ventileinlass (4) und einen Ventilauslass (5), ein Hauptventilelement (9), das zwischen Einlass (4) und Auslass (5) angeordnet ist, das durch eine Rückstellfeder (20) in eine geschlossene Position vorgespannt wird, umfasst, und mit einem oberen Plattenabschnitt (12), einem Drosselabschnitt (10) und einem Schaftabschnitt (11), der den Drosselabschnitt (10) mit dem oberen Plattenabschnitt (12) verbindet, wobei die obere Abdeckung (3) eine oder mehrere Fluidleitungen (18) zum Überführen eines Pilotfluids aus einer Zone (P1) neben dem Ventileinlass (4) zum Weichdrosselventilkörper (2) umfasst, wobei das Pilotfluid durch ein Pilotventil (7a) gesteuert und zum Einstellen eines Öffnungsgrades eines Hauptventils überführt wird, das sich im Weichdrosselventilkörper (2) befindet, wobei die obere Abdeckung (3) eine Stößelanordnung (8) umfasst, die zum Drosseln des Pilotfluids mittels einer Öffnung (17) angeordnet ist, wobei die Stößelanordnung (8) zum Drosseln des Pilotfluidstroms abhängig von einem Öffnungsgrad des Hauptventils angeordnet ist, **dadurch gekennzeichnet, dass,** wenn das Pilotventil (7a) erregt ist, der Pilotstrom zur Stößelanordnung (8) über die Fluidleitung (18), die die Zone (P1) neben dem Ventileinlass (4) mit der Stößelanordnung (8) verbindet, eingerichtet wird, der Pilotstrom durch die Öffnung (17) in die Druckkammer (19) über dem oberen Plattenabschnitt (12) fließt, in dem der Druck nicht den Pegel des Drucks in der Zone (P1) neben dem Ventileinlass (4), aber einen Pegel zwischen dem Druck am Ventileinlass (4) und dem Ventilauslass (5) erreicht, so dass dieser Druck eine Kraft auf dem Hauptventilelement (9) erzeugt, die eine nach oben gerichtete Kraft von einer Rückstellfeder (20), die das Hauptventilelement (9) in die geschlossene Position vorspannt, und die aufwärtsgerichtete Kraft vom Hauptventilelement (9) überwinden kann, da die Fläche des oberen Plattenabschnitts (12) etwa das Zweifache der Fläche des Drosselabschnitts (10) ist.

2. Kombination nach Anspruch 1, **dadurch gekennzeichnet, dass** die Stößelanordnung (8) ein Vorspannelement (15) und ein Stößelelement (13) umfasst, wobei das Vorspannelement (15) das Stößelelement (13) vorspannt, um den Pilotfluidstrom durch die obere Abdeckung (3) zu verringern.

3. Kombination nach einem der Ansprüche 1 oder 2, **dadurch gekennzeichnet, dass** die Stößelanordnung (8) eine Öffnung (17) hat und die Stößelanordnung (8) angeordnet ist, den Pilotfluidstrom durch die Öffnung (17) zu verringern.

4. Kombination nach den Ansprüchen 2 und 3, **dadurch gekennzeichnet, dass** das Vorspannelement (15) das Stößelelement (13) zur Öffnung (17) vorspannt.

5. Kombination nach einem der Ansprüche 1 bis 4, **dadurch gekennzeichnet, dass** die Stößelanordnung (8) das Stößelelement (13) hat, das zur Befestigung an einem Hauptventilelement (9) des Hauptventils angeordnet ist.

6. Kombination nach einem der Ansprüche 1 bis 5, **dadurch gekennzeichnet, dass** die Stößelanordnung (8) das Stößelelement (13) hat, das am Hauptventilelement (9) des Hauptventils befestigt ist.

7. Kombination nach einem der Ansprüche 1 bis 6, **dadurch gekennzeichnet, dass** das Stößelelement (3) angeordnet ist, die Position des Hauptventils mechanisch zu erfassen.

8. Verfahren zum Drosseln eines Hauptventils eines Weichdrosselventils (1), umfassend einen Ventileinlass (4) und einen Ventilauslass (5), ein Hauptventilelement (9), das zwischen Einlass (4) und Auslass (5) angeordnet ist, das durch eine Rückstellfeder (20) in eine geschlossene Position vorgespannt wird, und mit einem oberen Plattenabschnitt (12), einem Drosselabschnitt (10) und einem Schaftabschnitt (11), der den Drosselabschnitt (10) mit dem oberen Plattenabschnitt (12) verbindet, wobei das Verfahren den Schritt umfasst:
Drosseln eines Pilotfluids aus einer Zone (P1) neben dem Ventileinlass (4) für das Hauptventil mittels einer Öffnung (17) einer Stößelanordnung (8), um einen Öffnungsgrad des Hauptventils während eines Drosselprozesses des Hauptventils einzustellen, wobei das Drosseln des Pilotfluidstroms vom Öffnungsgrad des Hauptventils abhängig ist, sodass ein weicher Drosselprozess des Hauptventils möglich ist, **dadurch gekennzeichnet, dass** wenn das Pilotventil (7a) erregt ist, der Pilotstrom zur Stößelanordnung (8) über die Fluidleitung (18), die die Zone (P1) neben dem Ventileinlass (4) mit der Stößelanordnung (8) verbindet, eingerichtet wird, der Pilotstrom durch die Öffnung (17) in die Druckkammer (19) über dem oberen Plattenabschnitt (12) fließt, in dem der Druck nicht den Pegel zwischen des Drucks in der Zone (P1) neben dem Ventileinlass (4), aber einen Pegel zwischen dem Druck am Ventileinlass (4) und dem Ventilauslass (5) erreicht, so dass dieser Druck eine Kraft auf dem Hauptventilelement (9) erzeugt, die eine nach oben gerichtete Kraft von einer Rückstellfeder (20), die das Hauptventilelement (9) in die geschlossene Position vorspannt, und die aufwärtsgerichtete Kraft vom Hauptventilelement (9) überwinden kann, da die Fläche des oberen Plattenabschnitts (12) etwa das Zweifache der Fläche des Drosselabschnitts (10) ist.

9. Verfahren nach Anspruch 8, **dadurch gekennzeichnet, dass** die Stößelanordnung (8) eine Öffnung (17) und ein Stößelelement (13) umfasst, wobei das Stößelelement (13) den Pilotfluidstrom durch die Öffnung (17) verringert, wenn das Hauptventil einen vorgegebenen Öffnungsgrad erreicht.

10. Verfahren nach Anspruch 9, **dadurch gekennzeichnet, dass** ein Verringern des Pilotfluidstroms durch die Öffnung (17) ein Blockieren der Öffnung durch das Stößelelement (13) umfasst, um den Pilotfluidstrom durch die Öffnung (17) zu stoppen, wenn das Hauptventil den vorgegebenen Öffnungsgrad erreicht.

## Revendications

1. Combinaison d'un couvercle supérieur (3) et d'un corps de soupape d'étranglement souple (2), le corps de soupape (2) comprenant une entrée de soupape (4), une sortie de soupape (5), un élément de soupape principale (9) disposé entre l'entrée (4) et la sortie (5), sollicité par un ressort de rappel (20) à une position fermée, et ayant une section de plaque supérieure (12), une section d'étranglement (10) et une section de tige (11) reliant la section d'étranglement (10) à la section de plaque supérieure (12), le couvercle supérieur (3) comprenant un ou plusieurs conduits de fluide (18) pour transférer un flux de fluide pilote d'une zone (P1) proche de l'entrée de soupape (4) vers le corps de soupape d'étranglement souple (2), le flux de fluide pilote étant commandé par une soupape pilote (7a) et étant transféré pour régler un degré d'ouverture d'une soupape principale située dans le corps de soupape d'étranglement souple (2), le couvercle supérieur (3) comprenant un agencement suiveur (8) conçu pour étrangler le flux de fluide pilote au moyen d'un orifice (17), l'agencement suiveur (8) étant conçu pour étrangler le flux de fluide pilote en fonction d'un degré d'ouverture de la soupape principale, **caractérisée en ce que** lorsque la soupape pilote (7a) est sous tension, le flux pilote vers l'agencement suiveur (8) est établi via le conduit de fluide (18) reliant la zone (P1) proche de l'entrée de soupape (4) avec l'agencement suiveur (8), le flux pilote s'écoule à travers l'orifice (17) dans la chambre de pression (19) au-dessus de la section de plaque supérieure (12), dans laquelle la pression n'atteindra pas un niveau de la pression dans la zone (P1) proche de l'entrée de soupape (4), mais un niveau entre la pression à l'entrée de soupape (4) et à la sortie de soupape (5) de sorte que cette pression génère une force sur l'élément de soupape principale (9) qui peut surpasser une force ascendante d'un ressort de rappel (20) sollicitant l'élément de soupape principale (9) à la position fermée et la force ascendante de l'élément de soupape principale (9) parce que la surface de la section supérieure (12) est approximativement le double de la surface de la section d'étranglement (10).

2. Combinaison selon la revendication 1, **caractérisée en ce que** l'agencement suiveur (8) comprend un élément de sollicitation (15) et un élément suiveur (13), l'élément de sollicitation (15) sollicitant l'élément suiveur (13) de sorte à réduire le flux de fluide pilote à travers le couvercle supérieur (3).

3. Combinaison selon la revendication 1 ou 2, **caractérisée en ce que** l'agencement suiveur (8) a un orifice (17) et l'agencement suiveur (8) est conçu pour réduire le flux de fluide pilote à travers l'orifice (17) .

4. Combinaison selon les revendications 2 et 3, **caractérisée en ce que** l'élément de sollicitation (15) sollicite l'élément suiveur (13) vers l'orifice (17).

5. Combinaison selon l'une quelconque des revendications 1 à 4, **caractérisée en ce que** l'agencement suiveur (8) a l'élément suiveur (13) qui est conçu pour être fixé à un élément de soupape principale (9) de la soupape principale.

6. Combinaison selon l'une quelconque des revendications 1 à 5, **caractérisée en ce que** l'agencement suiveur (8) a l'élément suiveur (13) qui est fixé à l'élément de soupape principale (9) de la soupape principale.

7. Combinaison selon l'une quelconque des revendications 1 à 6, **caractérisée en ce que** l'élément suiveur (3) est conçu pour détecter mécaniquement la position de la soupape principale.

8. Procédé d'étranglement d'une soupape principale d'une soupape d'étranglement souple (1) comprenant une entrée de soupape (4), une sortie de soupape (5), un élément de soupape principale (9) disposé entre l'entrée (4) et la sortie (5), sollicité par un ressort de rappel (20) à une position fermée, et ayant une section de plaque supérieure (12), une section d'étranglement (10) et une section de tige (11) reliant la section d'étranglement (10) à la section de plaque supérieure (12), le procédé comprenant l'étape consistant à :
étrangler un flux de fluide pilote provenant d'une zone (P1) proche de l'entrée de soupape (4) pour la soupape principale au moyen d'un orifice (17) d'un agencement suiveur (8) de sorte à régler un degré d'ouverture de la soupape principale pendant un processus d'étranglement de la soupape principale, l'étranglement du flux de fluide pilote dépendant du degré d'ouverture de la soupape principale, de sorte à permettre un processus d'étranglement souple de la soupape principale, **caractérisé en ce que** lorsque la soupape pilote (7a) est sous tension, le flux pilote vers l'agencement suiveur (8) est établi par l'intermédiaire du conduit de fluide (18) reliant la zone (P1) proche de l'entrée de soupape (4) à l'agencement suiveur (8), le flux pilote s'écoule à travers l'orifice (17) dans la chambre de pression (19) au-dessus de la section de plaque supérieure (12), dans laquelle la pression n'atteindra pas un niveau de la pression dans la zone (P1) proche de l'entrée de soupape (4), mais un niveau entre la pression à l'entrée de soupape (4) et à la sortie de soupape (5) de sorte que cette pression génère une force sur l'élément de soupape principale (9) qui peut surpasser une force ascendante d'un ressort de rappel (20) sollicitant l'élément de soupape principale (9) vers la position fermée et la force ascendante de l'élément de soupape principale (9) parce que la surface de la section de plaque supérieure (12) est approximativement le double de la surface de la section d'étranglement (10).

9. Procédé selon la revendication 8, **caractérisé en ce que** l'agencement suiveur (8) comprend un orifice (17) et un élément suiveur (13), l'élément suiveur (13) réduisant le flux de fluide pilote à travers l'orifice (17) lorsque la soupape principale atteint un degré d'ouverture prédéfini.

10. Procédé selon la revendication 9, **caractérisé en ce que** la réduction du flux de fluide pilote à travers l'orifice (17) comprend l'étape consistant à bloquer l'orifice par l'élément suiveur (13) afin d'arrêter le flux de fluide pilote à travers l'orifice (17) lorsque la soupape principale atteint le degré d'ouverture prédéfini.
